# DEMANDE DE BREVET EUROPEEN

(11) **EP 1 465 120 A1**
(43) Date de publication de la demande: **06.10.2004**
(21) Numéro de dépôt: 04290845.9
(22) Date de dépôt: 31.03.2004
(51) Int. Cl.: G07C 9/00, B60R 25/00

(54) **Procédé d'autorisation sélective de l'accès à un véhicule automobile**

(30) Priorité: 01.04.2003 FR 0304049
(71) Demandeur: Peugeot Citroen Automobiles SA, 78140 Vélizy Villacoublay (FR)
(72) Inventeur: Chandebois, Michael, 91470 Forges les Bains (FR)
(74) Mandataire: Bouget, Lucien

(57) **Abrégé**

Le véhicule (1) comporte un système automatique d'accès et de démarrage utilisant des moyens de détection d'identifiants autorisés et une mémoire de stockage d'enregistrement des identifiants. A l'ouverture d'une porte (5) du véhicule, lorsqu'un premier utilisateur quitte le véhicule (1), la mémoire du système d'accès et de démarrage automatique est mise dans un état initial. A la fermeture de la dernière porte, après le départ du premier utilisateur (9), on détecte les identifiants restés à l'intérieur du véhicule (1) et on réalise une mise à jour de la mémoire en tenant compte des identifiants (6a, 6b) détectés à l'intérieur du véhicule (1). Après le verrouillage (15) du véhicule (1) on autorise l'accès au véhicule seulement lorsque le système d'accès détecte un identifiant autorisé (9a) différent des identifiants restés à l'intérieur du véhicule automobile.

## Description

L'invention concerne un procédé d'autorisation sélective de l'accès à un véhicule automobile comprenant un système automatique d'accès et de démarrage.

On connaît des véhicules automobiles qui comportent un système d'accès et de démarrage sans intervention manuelle, appelé "accès et démarrage mains libres" (ADML), un tel système permettant de réaliser le déverrouillage des portières et/ou d'autres dispositifs de sécurité anti-vol du véhicule automobile, sans intervention manuelle de l'utilisateur. Pour cela, l'utilisateur est muni d'un moyen de reconnaissance ou "identifiant", qui permet, à une unité de commande du déverrouillage du véhicule automobile, de reconnaître l'utilisateur autorisé, lorsque l'utilisateur est à proximité d'une porte du véhicule automobile et, généralement, lorsque l'utilisateur actionne la poignée d'ouverture ou plus généralement tout dispositif de commande d'ouverture extérieure de la porte.

L'identifiant peut être constitué par exemple par une carte électronique ou un émetteur fournissant un code d'identification qui doit être reconnu par l'unité de commande de déverrouillage du véhicule automobile pour permettre la manoeuvre de déverrouillage.

Les enregistrements des identifiants peuvent être placés dans une mémoire, de manière à permettre au système automatique d'accès et de démarrage du véhicule automobile de reconnaître les identifiants autorisés.

Généralement, le système automatique d'accès et de démarrage comporte des moyens de détection des identifiants, dans une zone à l'intérieur de l'habitacle du véhicule automobile et dans plusieurs zones situées au moins partiellement à l'extérieur du véhicule automobile, par exemple au voisinage des portières du véhicule et au voisinage de la partie arrière du véhicule.

Les moyens de détection du système automatique d'accès et de démarrage sont généralement constitués par des antennes couvrant une certaine zone dans laquelle un identifiant constitué par un émetteur peut transmettre un code caractéristique de l'identifiant à une unité de traitement du système d'accès et de démarrage.

Les zones de détection à l'extérieur du véhicule sont disposées au voisinage immédiat de la carrosserie du véhicule, par exemple au voisinage d'une porte ou du coffre arrière. Les antennes couvrent généralement non seulement une zone extérieure au véhicule mais également une certaine zone à l'intérieur de l'habitacle.

De ce fait, un identifiant autorisé porté par un utilisateur resté à l'intérieur du véhicule peut se trouver dans une zone de détection d'une antenne extérieure. Dans ce cas, le système automatique d'accès et de démarrage autorise l'accès au véhicule automobile, du fait qu'un identifiant autorisé est perçu dans une zone de détection extérieure.

Cette situation n'est pas acceptable, dans le cas où au moins un utilisateur qui est resté à l'intérieur de l'habitacle du véhicule automobile à l'arrêt, après la sortie d'un autre utilisateur, désire s'enfermer à l'intérieur du véhicule automobile et interdire l'accès du véhicule à toute personne non autorisée. Dans ce cas, si le second utilisateur resté à l'intérieur du véhicule automobile est en possession d'un identifiant, cet identifiant autorisé risque de se trouver dans une zone couverte par une antenne extérieure. Même si le second utilisateur resté à l'intérieur du véhicule a effectué un verrouillage du véhicule, son identifiant s'il se trouve dans une zone de surveillance d'une antenne extérieure risque de commander le déverrouillage et donc de permettre l'accès du véhicule à une personne non autorisée.

Pour éviter un tel inconvénient, il est nécessaire de vérifier que, dans le cas où un identifiant autorisé demande l'accès au véhicule automobile, cet identifiant se trouve bien à l'extérieur du véhicule.

Il est donc nécessaire, dans le cas d'une demande d'accès par un identifiant autorisé, dans un premier temps, de vérifier si cet identifiant ne se trouve pas à l'intérieur de l'habitacle du véhicule, c'est-à-dire de détecter le ou les identifiants présents à l'intérieur de l'habitacle et comparer leur code d'enregistrement avec celui de l'identifiant demandant l'accès.

Ces vérifications allongent le temps nécessaire pour autoriser ou refuser l'accès au véhicule automobile.

Le but de l'invention est donc de proposer un procédé d'autorisation sélective de l'accès à un véhicule automobile comprenant un système automatique d'accès et de démarrage utilisant des moyens de détection d'identifiants autorisés à l'extérieur et à l'intérieur du véhicule automobile et une mémoire de stockage d'enregistrements des identifiants, pour permettre, lorsqu'au moins un premier utilisateur du véhicule muni d'un premier identifiant quitte le véhicule, à un second utilisateur muni d'un second identifiant de s'enfermer dans le véhicule sans risque d'intrusion non souhaitée, ce procédé permettant d'autoriser ou de refuser l'accès au véhicule, pratiquement sans délai.

Dans ce but :
- à l'ouverture d'une porte du véhicule, lorsque le premier utilisateur quitte le véhicule, la mémoire est mise automatiquement dans un état initial,
- à la fermeture de la dernière porte qui a été ouverte lorsque le premier utilisateur a quitté le véhicule, on détecte l'au moins un second identifiant de l'au moins un second utilisateur présent à l'intérieur du véhicule et on réalise une mise à jour de la mémoire en tenant compte du second identifiant détecté à l'intérieur du véhicule, et
- après le verrouillage du véhicule, on autorise l'accès au véhicule seulement lorsque le système d'accès détecte un identifiant autorisé différent de l'au moins un second identifiant dont l'enregistrement a été pris en compte par la mémoire.

Afin de bien faire comprendre l'invention, on va décrire à titre d'exemple, en se référant aux figures jointes en annexe, un mode de réalisation du procédé suivant l'invention d'autorisation sélective d'accès à l'intérieur d'un véhicule automobile à l'arrêt dans lequel un utilisateur s'est enfermé.

La figure 1 est une vue schématique en plan d'un véhicule automobile et de zones de détection d'identifiants à l'intérieur et à l'extérieur du véhicule.

La figure 2 est un schéma montrant la mise en oeuvre du procédé suivant l'invention au cours de phases successives.

La figure 3 est un organigramme montrant les étapes successives du procédé suivant l'invention, jusqu'au verrouillage du véhicule dans lequel un utilisateur est enfermé.

La figure 4 est un organigramme montrant la logique de l'autorisation sélective d'accès du procédé suivant l'invention.

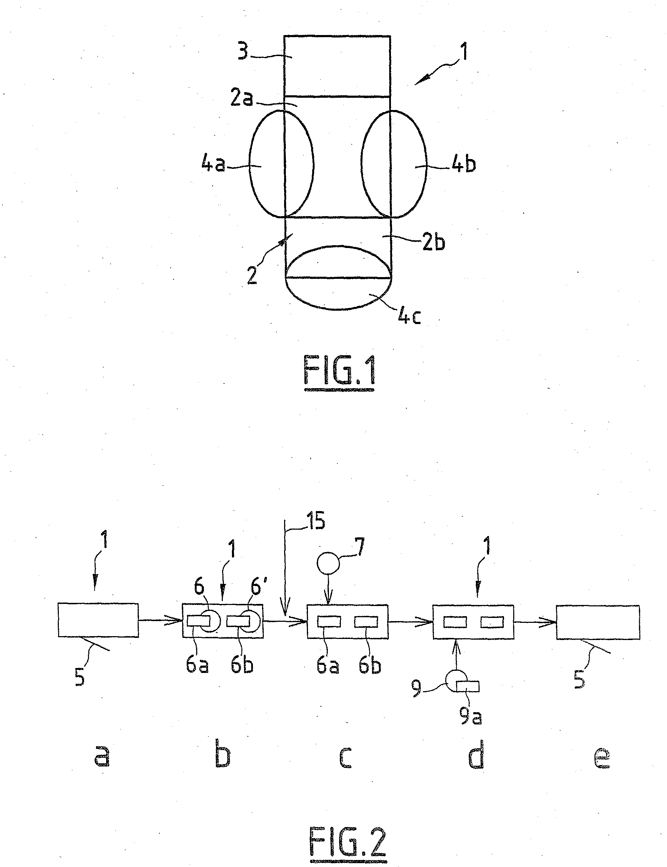

Sur la figure 1, on a représenté de manière très schématique, dans une vue en plan, un véhicule automobile désigné de manière générale par le repère 1. Le véhicule automobile 1 comporte une partie interne 2 comportant elle-même l'habitacle proprement dit 2a et une partie arrière 2b ainsi qu'un compartiment moteur 3.

Le véhicule automobile 1 est équipé d'un système d'accès et de démarrage de type ADML utilisant des moyens de détection d'identifiants à l'intérieur et à l'extérieur du véhicule automobile.

Un premier moyen de détection permet de détecter la présence d'identifiants dans la partie interne 2 du véhicule automobile, c'est-à-dire soit dans l'habitacle 2a soit dans la partie arrière 2b.

Le système d'accès et de démarrage contrôlé du véhicule automobile comporte également des moyens de détection extérieurs constitués par trois antennes dont les zones de détection 4a, 4b et 4c ont été représentées sur la figure 1.

Les zones de détection 4a et 4b permettent de détecter la présence d'un identifiant au voisinage d'une porte de véhicule automobile, les zones de détection 4a et 4b des antennes s'étendant à la fois à l'extérieur du véhicule automobile et dans la partie interne 2 du véhicule.

Une troisième antenne comporte une zone de détection 4c s'étendant à la fois à l'extérieur du véhicule automobile au voisinage de sa partie arrière et dans la partie 2b à l'intérieur du véhicule automobile.

Le système automatique d'accès et de démarrage du véhicule automobile de type ADML comporte en particulier une mémoire dans laquelle peuvent être enregistrés les codes des identifiants autorisés pouvant demander le déverrouillage du véhicule automobile. Le système automatique d'accès et de démarrage du véhicule automobile peut fonctionner uniquement pour autoriser l'accès au véhicule et le démarrage du véhicule sans intervention manuelle d'un utilisateur mais peut également fonctionner pour réaliser automatiquement le verrouillage du véhicule automobile, lorsqu'un utilisateur est sorti du véhicule et s'éloigne en dehors d'une zone de surveillance. Dans ce cas, généralement, le verrouillage n'est réalisé que si le système ne détecte aucun utilisateur muni d'un identifiant à l'intérieur du véhicule automobile.

D'autre part, le verrouillage du véhicule automobile par l'intérieur peut être obtenu de manière manuelle ou automatique par un utilisateur resté à l'intérieur du véhicule après son arrêt.

Dans le cas où un premier utilisateur du véhicule automobile, par exemple le conducteur, sort du véhicule après un arrêt et s'éloigne du véhicule automobile, le véhicule reste généralement déverrouillé dans le cas où au moins un second utilisateur est resté à l'intérieur de l'habitacle 2a du véhicule.

Dans le cas où le second utilisateur qui est resté à l'intérieur de l'habitacle du véhicule automobile après le départ du premier utilisateur désire s'enfermer dans le véhicule automobile, il peut actionner un dispositif de verrouillage depuis l'intérieur du véhicule automobile, de manière manuelle ou automatique. Dans ce cas, on désire généralement éviter l'intrusion de toute personne indésirable dans le véhicule, c'est-à-dire de toute personne qui ne serait pas munie d'un identifiant autorisé. Néanmoins, il est nécessaire que les utilisateurs munis d'un identifiant et en particulier le ou les premiers utilisateurs sortis du véhicule puissent y avoir accès à leur retour.

Il est donc nécessaire que le système d'accès et de démarrage automatique du véhicule automobile puisse distinguer en un temps très court les demandes provenant d'identifiants autorisés présents à l'extérieur du véhicule automobile, de demandes provenant d'identifiants d'utilisateurs restés à l'intérieur du véhicule automobile qui peuvent se trouver dans des zones de détection d'antennes extérieures telles que 4a, 4b et 4c s'étendant partiellement à l'intérieur du véhicule automobile.

Sur la figure 2, on a représenté différentes étapes a à e successives caractéristiques du procédé suivant l'invention.

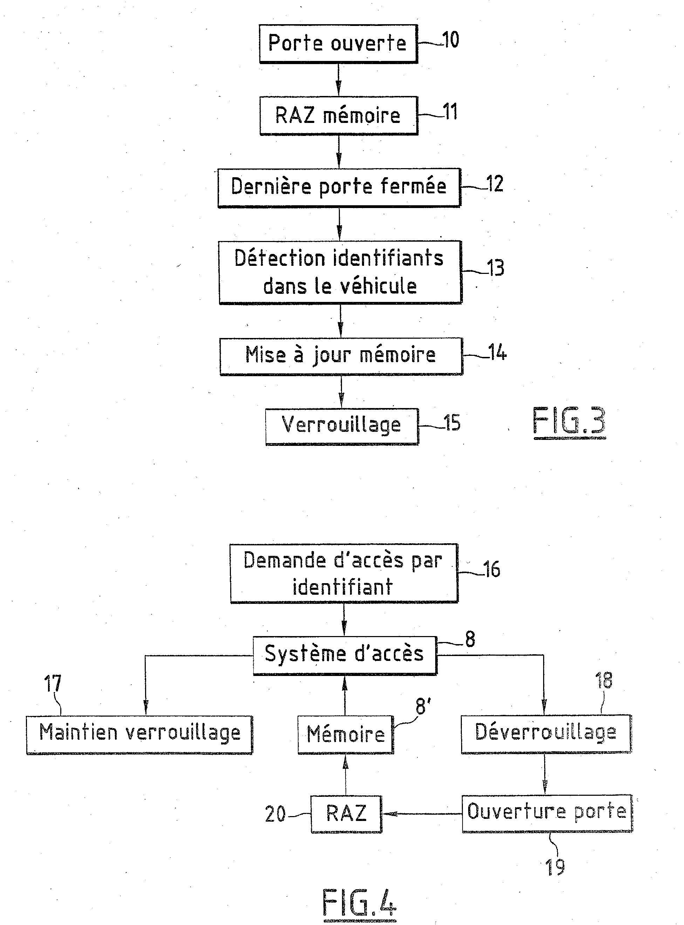

Sur la figure 3 on a représenté, sous forme d'un organigramme, les différentes étapes successives mises en oeuvre dans le cadre du procédé selon l'invention entre le moment où un premier utilisateur quitte le véhicule automobile et le moment où un second utilisateur resté à l'intérieur du véhicule verrouille celui-ci de l'intérieur.

Sur la figure 2,a, on a représenté de manière schématique le véhicule 1 arrêté et en stationnement dont la porte 5, par exemple la porte du conducteur, est ouverte pour permettre à un premier utilisateur, par exemple le conducteur, de quitter le véhicule automobile. Comme représenté sur la figure 3, à l'étape 10 qui correspond à l'étape représentée sur la figure 2,a, l'ouverture de la porte 5 entraîne l'accomplissement de l'étape suivante 11 qui est une remise à zéro de la mémoire ou remise dans un état initial. Dans cet état initial, la mémoire du système d'accès et de démarrage automatique peut être, dans une première forme de l'invention, totalement vide d'enregistrement d'identifiants autorisés.

Dans une seconde forme de réalisation de l'invention, la mémoire peut contenir, dans son état initial, l'enregistrement de tous les identifiants autorisés.

Comme représenté sur la figure 2,b, dans une seconde étape du procédé selon l'invention, au moins un premier utilisateur est sorti du véhicule automobile 1 puis a refermé la ou les portes ouvertes pour permettre la sortie du ou des premiers utilisateurs.

Deux seconds utilisateurs 6 et 6' munis d'identifiants 6a et 6b sont restés à l'intérieur du véhicule automobile après le départ du ou des premiers utilisateurs.

Après la fermeture de la dernière porte après la sortie des premiers utilisateurs, cette étape étant représentée sous la référence 12 sur l'organigramme de la figure 3, on déclenche l'action représentée sous la référence 13 qui consiste à détecter tous les identifiants présents à l'intérieur du véhicule automobile après la fermeture de la dernière porte.

Dans le cas représenté sur la figure 2,b, deux utilisateurs 6 et 6' sont restés dans le véhicule automobile, chacun des utilisateurs étant muni d'un identifiant qui est détecté dans l'étape 13, ce qui permet de mettre à jour la mémoire du système d'accès et de démarrage automatique, comme représenté en 14 sur l'organigramme de la figure 3.

La mise à jour de la mémoire peut consister à enregistrer les identifiants présents dans le véhicule automobile après la fermeture de la dernière porte si la mémoire est vide dans son état initial.

La mise à jour de la mémoire pourrait consister également à supprimer de la mémoire les enregistrements d'identifiants présents à l'intérieur du véhicule automobile, dans le cas où, dans son état initial, la mémoire du système d'accès et de démarrage automatique renferme l'ensemble des identifiants autorisés.

Dans la phase 15 représentée sur la figure 3 sous la forme d'un rectangle et entre les figures 2,b et 2,c sous la forme d'une flèche, un verrouillage du véhicule automobile est réalisé de l'intérieur du véhicule. Ce verrouillage peut être réalisé de manière manuelle ou automatique par l'un des utilisateurs restés à l'intérieur du véhicule automobile.

Dans l'étape représentée sur la figure 2,c, une personne 7 non munie d'un identifiant autorisé tente de pénétrer dans le véhicule automobile, par exemple en actionnant la poignée d'une porte.

L'accès au véhicule est interdite à la personne 7 non munie d'identifiant, du fait du verrouillage antérieur du véhicule dans la phase 15.

En effet, même si un identifiant 6a, 6b de l'un des utilisateurs resté à l'intérieur du véhicule automobile se trouve dans une zone couverte par une antenne extérieure et débordant à l'intérieur du véhicule automobile, le système d'accès n'autorise par le déverrouillage.

Comme représenté sur la figure 4, le fonctionnement du système est le suivant. Le système d'accès 8 reçoit les informations de la mémoire 8' et, lors d'une demande d'accès représentée en 16, le système d'accès 8 vérifie si la demande d'accès provient d'un identifiant enregistré précédemment, comme se trouvant à l'intérieur du véhicule automobile.

Dans le cas où les identifiants présents à l'intérieur du véhicule automobile sont enregistrés dans la mémoire, le système d'accès vérifie que la demande en 16 ne provient pas de l'un des identifiants enregistrés.

Dans le cas où l'on a supprimé les enregistrements des identifiants détectés à l'intérieur du véhicule automobile, le système d'accès 8 contrôle si l'identifiant demandant l'accès en 16 est enregistré ou non dans la mémoire. Si l'identifiant n'est pas enregistré dans la mémoire, le système d'accès maintient le verrouillage, comme représenté en 17.

Sur la figure 2,d, on a représenté une personne 9 munie d'un identifiant autorisé 9a qui demande l'accès au véhicule automobile 1, par exemple en actionnant une poignée.

La personne 9 munie d'un identifiant autorisé 9a peut être par exemple le premier utilisateur, c'est-à-dire le conducteur, ou l'un des premiers utilisateurs sortis précédemment du véhicule automobile ou tout autre utilisateur muni d'un identifiant autorisé.

Dans ce cas, le système d'accès 8 peut vérifier qu'un identifiant autorisé et non enregistré précédemment comme présent à l'intérieur du véhicule automobile demande l'accès. Dans ce cas, le système d'accès autorise le déverrouillage, comme représenté en 18.

L'utilisateur 9 ouvre la portière, comme représenté en 19, ce qui entraîne la remise de la mémoire 8' dans son état initial, comme représenté en 20.

Le système se trouve à nouveau dans son état initial, comme représenté sur la figure 2,a.

Le procédé suivant l'invention permet donc à des utilisateurs restés à l'intérieur d'un véhicule automobile de s'enfermer sans risque d'intrusion d'une personne non autorisée.

L'autorisation ou l'interdiction de déverrouillage du véhicule automobile est réalisée sans délai, du fait que les identifiants présents à l'intérieur du véhicule automobile ont été précédemment enregistrés dans la mémoire 8' (ou supprimés de la mémoire) qui est reliée au système d'accès et de démarrage automatique.

L'invention peut être appliquée à tout système d'accès et de démarrage automatique d'un véhicule automobile, par exemple de type ADML.

## Revendications

1. Procédé d'autorisation sélective de l'accès à un véhicule automobile (1) comprenant un système automatique d'accès et de démarrage (8) utilisant des moyens de détection d'identifiants (6a, 6b, 9a) autorisés à l'extérieur et à l'intérieur du véhicule automobile (1 ) et une mémoire de stockage (8') d'enregistrement des identifiants (6a, 6b, 9a) pour permettre, lorsqu'au moins un premier utilisateur (9) du véhicule automobile muni d'un premier identifiant (9a) quitte le véhicule (1) à au moins un second utilisateur (6, 6') muni d'un second identifiant (6a, 6b) de s'enfermer dans le véhicule (1) sans risque d'intrusion non souhaitée, **caractérisé par le fait :**
- **qu'**à l'ouverture d'une porte (5) du véhicule (1), lorsque le premier utilisateur (9) quitte le véhicule (1), la mémoire (8') est mise automatiquement dans un état initial,
- **qu'**à la fermeture de la dernière porte (5) qui a été ouverte lorsque le premier utilisateur (9) a quitté le véhicule (1), on détecte l'au moins un second identifiant (6a, 6b) de l'au moins un second utilisateur (6, 6') présent à l'intérieur du véhicule (1) et on réalise une mise à jour de la mémoire (8') en tenant compte de l'au moins un second identifiant (6a, 6b) resté à l'intérieur du véhicule (1), et
- **qu'**après le verrouillage (15) du véhicule, on autorise l'accès au véhicule, seulement lorsque le système d'accès (8) détecte un identifiant (9a) autorisé et différent de l'au moins un second identifiant (6a, 6b) dont l'enregistrement a été pris en compte par la mémoire (8').

2. Procédé suivant la revendication 1, **caractérisé par le fait que**, dans son état initial, la mémoire est vide d'enregistrement d'identifiants (6a, 6b, 9a) et qu'on réalise la mise à jour de la mémoire en enregistrant les identifiants (6a, 6b) restés à l'intérieur du véhicule (1).

3. Procédé suivant la revendication 1, **caractérisé par le fait que** la mémoire (8') renferme, dans son état initial, l'ensemble des identifiants autorisés (6a, 6b, 9a) et qu'après la fermeture de la dernière porte (5) du véhicule automobile (1), on supprime de la mémoire les identifiants détectés à l'intérieur du véhicule automobile.
